# EUROPEAN PATENT SPECIFICATION

(11) **EP 3 375 299 B1**
(45) Date of publication and mention of the grant of the patent: **16.07.2025**
(21) Application number: 18162327.3
(22) Date of filing: 16.03.2018
(51) Int. Cl.: A23L 25/00, A23L 11/00, A23L 29/212, A23P 20/10, A23P 20/20, A23P 20/15

(54) **METHOD FOR COATING FOODSTUFF WITH SPRAY COOKED AGGLOMERATED WAXY STARCH**
VERFAHREN ZUM ÜBERZIEHEN VON LEBENSMITTELN MIT SRÜHGEKOCHTER, AGGLOMERIERTER WACHSSTÄRKE
PROCÉDÉ D'ENROBAGE DE PRODUITS ALIMENTAIRES AVEC DE L'AMIDON CIREUX AGGLOMÉRÉ CUIT PAR SPRAY

(30) Priority: 17.03.2017 US 201715462412
(43) Date of publication of application: 19.09.2018
(73) Proprietor: Corn Products Development Inc., Westchester, IL 60154 (US)
(72) Inventor: Yurgec, Matthew, Bridgewater, NJ New Jersey 08807 (US); Sanchez, Sergio Vaargas, Bridgewater, NJ New Jersey 08807 (US)
(74) Representative: Novagraaf Group

(56) References cited:
- EP-A2- 0 438 782
- EP-A2- 0 480 433
- WO-A1-00/54606
- WO-A1-2015/057789
- DE-A1- 2 453 890
- US-A1- 2004 067 282
- ANONYMOUS: "Hardness Testing Pitfalls", February 2011 (2011-02-01), XP002783339, Retrieved from the Internet <URL:https://materion.com/-/media/files/alloy/newsletters/technical-tidbits/issue-no-26---hardness-testing-pitfalls.pdf> [retrieved on 20180725]
- STEFAN HORSTMANN ET AL: "Starch Characteristics Linked to Gluten-Free Products", FOODS, vol. 6, no. 4, 6 April 2017 (2017-04-06), pages 29, XP055434386, DOI: 10.3390/foods6040029

## Description

### CROSS-REFERENCE TO RELATED APPLICATIONS

Disclosed herein are methods for making coated foodstuff, wherein the coatings are made from corn starch that expand on baking. More specifically, a method for coating made with a spray cooked, agglomerated waxy corn starch is disclosed herein.

Corn starch is widely used in manufactured foodsutffs (e.g. snack foods). It can be used as a sole starch component or mixed with other starches and flours. While corn starch is known to expand well during cooking, compared to other starches, like tapioca, it makes softer food snacks. It is desirable to have a corn starch that retains its favorable expansion characteristics while producing a harder foodstuff (e.g. snack food). US2004/067282 discloses the use of pregelatinized waxy maize starch to provide expanded, crispy, chip like textured coatings on an edible core material.

Disclosed herein is a method of making a coated foodstuff, wherein the foodstuff comprises an edible substrate and a coating comprising at least one layer of a coating mixture comprising a spray cooked agglomerated waxy corn starch as a first starch, baking the coated edible substrate at a temperature from 130° C and 190° for a time between 10 and 60 minutes. In one embodiment, the method of making a coated foodstuff comprises coating an edible substrate, wherein the a coating comprises at least one layer of a coating mixture comprising a spray cooked agglomerated waxy corn starch as a first starch as noted above and a second starch selected from a starch or flour. In a further embodiment, the first starch described herein has a time to peak hydration viscosity of between about 5.5 and about 7.5 minutes. In some embodiments, the coating described herein expands during baking to a coating expansion of between about 1.7 and about 2.6mm, between about 2.0 and about 2.5 mm, between about 2.125 and about 2.375 mm, or between about 2.2 and 2.3 mm. In other embodiments, the coating described herein has a hardness after being baked of between about 2500 and about 4000 grams, about 2500 and about 3800 grams, about 2600 and about 3800 grams, abut 2700 and about 3750 grams, about 2800 and about 3750 grams, about 2900 and about 3750 grams, about 3250 and about 3500, or about 3000 and about 3750 grams. In yet further embodiments, the coatings described herein have a hardness-to-expansion ratio of about 1100:1 to about 2200:1 g/mm. In other embodiments, the foodstuff in the method is a snack food. In some embodiments, the edible substrate is a nut, seed, legume, or vegetable. In yet other embodiments, the edible substrate has a moisture content of less than about 5% by weight.

Figure 1 is a graph depicting the hardness of a coating made from various starches set forth in Table 2.

Figure 2 is a graph depicting the coating expansion of coatings made from various starches set forth in Table 2.

As used herein, a "waxy starch" is derived from plants that naturally have low levels of amylose. The plants may be as found in nature, genetically modified, or bred through controlled breading programs. In some embodiments, the waxy starch of this invention has less than 10% by weight amylose, less than 5%, less than 3%, or essentially 0% amylose.

As used herein, an "agglomerated starch" is a starch composition comprising two or more starch particles bound together with a binding agent. Non-limiting examples of binding agents used in the art include sugar syrups, maltodextrin, water, and modified starch that have been at least partly dissolved in water. Such modified starch can be modified by pregelatinization, cross-linking, stabilization, hydrolysis or a combination thereof.

As used in herein, "unmodified", with regard to a starch or flour, means the starch or flour is not modified in any way such as by chemical, physical or enzymatic modification. For example, a pregelatinized starch is a modified starch.

A used herein, "cake flour" means one of a commercially available class of wheat flours that are bleached and are typically finer than commercially available all-purpose flours. Additionally, cake flour typically has a relatively low percentage, by weight of protein (around 8% versus 10%) compared to all-purpose flour.

As used herein, "coating expansion" refers to height of the coating measured from the inside edge of the coating to its outside edge after baking.

As used herein, "low protein flour" refers to flours having no more than about 8% protein by weight.

As used herein, the term "second starch" excludes a spray cooked agglomerated waxy corn starch.

Spray cooked, agglomerated starch is a pregelatinized starch made by a spray cooking process. Spray cooking is a process of cooking starch in a spray nozzle with a mixture of steam/slurry plus pressure followed by direct atomization into the spray chamber either as a fine particle that could be rewet agglomerated later or agglomerated within the spray dryer at the point of atomization.

Unless said otherwise, all ratios or percentages are by weight.

One embodiment is directed to a method for making a coated foodstuff comprising coating an edible substrate with a coating comprising at least one layer of a coating mixture comprising a spray cooked agglomerated waxy corn starch as a first starch, and baking the coated edible substrate at a temperature from 130° C and 190° for a time between 10 and 60 minutes. Another embodiment is directed to a method of making a coated foodstuff comprising coating an edible substrate with a coating comprising at least one layer of a coating mixture comprising a spray cooked agglomerated waxy corn starch as a first starch and a second starch selected from a starch or flour, wherein said edible substrate is coated with said coating. In one embodiment, the first starch described herein has a peak time to hydration viscosity of between 5.5 and 7.5 minutes or between about 6 and 7 minutes. In other embodiments, the first starch described herein has a median particle size (d50) of between about 150 and about 250 microns or between about 175 and about 225 microns. In still other embodiments, the first starch described herein has a d10 (10% of particles being smaller than) particle size distribution of between about 50 and about 100 microns or about 50 microns. In yet still further embodiments, the d90 (90% of particles being smaller than) is between about 325 and about 425 microns or between about 350 and about 400 microns. In still other embodiments, the first starch described herein has a volume mean particle size (D [4,3]) of between about 100 and 300 microns or between 150 and 250 microns.

Atomization during spray cooking controls the particle size. Size distribution of the agglomerated starches may also be controlled by using appropriate screening methods.

In one embodiment, the coating described herein is prepared from a coating mixture comprising a first starch and a second starch selected from starch and wheat flour, caked flour, low protein flour, and gluten containing flour. In one embodiment, the low protein flour described herein contains no more than about 8% protein by weight. In another embodiment, the coating mixture described herein comprises from about 50% of a first starch and 50% of a second starch or flour. In still another embodiment, the coating mixture described herein comprises from about 25% to about 75% of a first starch and from about 25% to about 75% of a second starch. In one embodiment, the first and second starch are mixed together to form a homogenous dry mixture. In still other embodiments, one or more coating mixture described herein comprises additional ingredients selected from a chemical leavening agent, such as, e.g. bicarbonate salts including for example sodium bicarbonate and ammonium bicarbonate; acid salts, including, for example, calcium phosphate and ammonium sodium sulfate; and tartaric acid. In yet still further embodiments, one or more coating mixture described herein comprises a leavening agent in an amount ranging from about 0.1% to about 1% by weight of the coating mixture. In even yet still further embodiments, one or more coating mixture described herein comprises sugar in an amount of from about 10% to about 40% of the coating mixture. In even still further embodiments, one or more coating mixture described herein comprises other seasoning and flavorings commonly used in a foodstuff including but not limited to salt.

In some embodiments, the second starch described herein is a starch and/or flour. In other embodiments, the second starch described herein is a wheat flour. In yet other embodiments, the second starch is a spray cooked, agglomerated starch other than a spray cooked, agglomerated waxy corn starch. In further embodiments, the spray cooked agglomerated starch other than a spray cooked, agglomerated waxy corn starch is a mixed starch or flour from oats, saga, corn, tapioca, pea or other pulse flours, barley, amaranth, arrowroot, canna, quinoa and sorghum, and waxy (i.e. low amylose), and high amylose variants of the foregoing. In an even further embodiment, the second starch is not pregelatinized or modified in any way. In still other embodiments, the second starch may be modified using standard modifications such as, for example, etherification, esterification, cross-linking, conversion, annealing, heat moisture treatment, thermal inhibition, and the like.

In some embodiments, the coating mixture is applied to the edible substrate with an adhesion layer comprising water or syrup made from sugar, gums, modified starches and starch derivatives, maltodextrins, and the like. In some embodiment, the syrup is a simple syrup comprising sugar and water. In other embodiments, the simple syrup is made by dissolving the sugar in water in a weight ratio of between about 1:4 sugar to water to about 4:1 sugar to water or the sugar to water ratio is about 1:1. In still other embodiments, the syrup further comprises other water soluble components, such as, for example, salt or chemical leavening agents of the types described above.

In yet further embodiments, the foodstuffs are coated using suitable methods known in the art. In some embodiments, a pan coater is used to coat an edible substrate with the adhesion layer and the coating comprising a first starch and optionally a second starch, which allows for alternating coatings of the adhesion layer and coating mixture layer. In still other embodiments, the coater applies substantially uniform coatings to the edible substrate. In still yet other embodiments, the edible substrate is coated more than once, by alternately coating it with the adhesion layer and the coating mixture. In some embodiments, more than 1 coating is used. In other embodiments, more than 5 coatings are used. In still other embodiments, more than 10 coatings are used.

In some embodiments, the method of making coated foodstuffs described herein involves baking in any type of industrial oven such as conventional ovens, fluidized bed reactors and driers, mixers and blenders equipped with heating devices, and other types of heaters. In the inventive method, the coated foodstuffs are subjected to baking at temperatures between 130 °C and 190 °C, preferably 150 °C and 180 °C, or around 170 °C. In the inventive method, the coated foodstuffs are baked for between 10 and 60 minutes, preferably between 20 and 30 minutes, around 25 minutes, or for 22 minutes.

In still other embodiments, the coated foodstuffs comprise a coating comprising at least one layer with a coating expansion of between about 1.7 and about 2.6mm, between about 2.0 and about 2.5 mm, between about 2.125 and about 2.375 mm, or between about 2.2 and 2.3 mm.

In yet other embodiments, the coated foodstuffs comprise a coating comprising at least one layer that has a hardness of between about 2500 and about 4000 grams, about 2500 and about 3800 grams, about 2600 and about 3800 grams, abut 2700 and about 3750 grams, about 2800 and about 3750 grams, about 2900 and about 3750 grams, about 3250 and about 3500, or about 3000 and about 3750 grams.

In some embodiments, the coating described herein has a hardness-to-expansion ratio of about 1100:1 to about 2200:1 g/mm, about 1500:1 to about 1600:1 g/mm, or about 1550:1 to about 1575:1 g/mm.

In some embodiments, the edible substrate described herein is any foodstuff that can be coated. In other embodiments, the edible substrate is selected from nuts (e.g. including almonds, cashews, etc.), seeds (e.g., sunflower seeds, fennel seeds, pumpkin seeds, etc.), legumes (peanuts, peas, etc.), and vegetables. In still other embodiments, the edible substrate described herein is dried, has a native moisture level, or is of a composition that little moisture transfers from the substrate to the coating prior to or during baking. In yet still other embodiments, the edible substrate described herein is fully cooked before being coated and baked. In yet even still further embodiments, the edible substrate described herein has a moisture content of less than about 5%.

### EXAMPLES

### Procedural protocols

Hardness measurements: Baked coatings were evaluated for hardness using a TA-XTPlus Texture Analyzer (Texture Technologies, Hamilton, MA) equipped with analytical software (Stable Microsystems, Surrey, UK). A 3 point bend rig was used for the measurement. The base of the rig had a 20 mm gap and the blade was 3 mm in diameter with a rounded edge. Conditions are listed in Table 1:

**Table 1**

| **Test Mode** | **Compression** |
|---|---|
| Pre-test Speed | 5 mm/sec |
| Test Speed | 20 mm/sec |
| Post-test Speed | 10 mm/sec |
| Target Mode | Distance |
| Distance | 15 mm |
| Trigger Type | Auto |
| Trigger Force | 20 grams |
| Load Cell | 5 kg |

The measurements were taken for the peak force required to break the coating (in grams) and the distance to break (mm). A total of 30-35 samples were tested in order to get a full view of standard deviation (which typically ranged between 10-20%). After taking the measurements, the data was put through Minitab statistical software to remove outliers. A One-way ANOVA test with Tukey's LSD was used to identify statistical product groupings.

Volume measurements: Measured by measuring the volume of a defined number of whole coated peanuts (80 pieces) in a graduated cylinder.

Coating expansion measurements: Measured by hand using calipers. Results are based on the average thickness of coatings on 80 whole coated peanuts, wherein the peanuts were sliced open and the coating thereon measured from the outer surface of the coating to the inner surface of the coating. As used herein, the term "coating expansion" refers to the height of the coating measured from the inside edge of the coating to its outside edge after baking.

Hydration viscosity measurements: Measured with a Brabender^{®} Micro Visco-Amylo-Graph^{®} (manufactured by Brabender^{®} GmbH & Co. KG, Duisburg, Germany). Measurements were made on a starch slurry of 4.5% starch solids, at pH 4. The slurry was heated to 30o C for 5 minutes, increased to 95o C and held for 15 minutes, and then cooled back down to 30o C. Time to peak viscosity is measured from the starting of mixing of the starch into solution (at 30o C) until slurry reaches peak viscosity.

Particle size: The particle size of the spray cooked, agglomerated waxy corn starch was measured by laser diffraction using a Malvern Mastersizer^{®} 2000.

The starches used in the Examples that follow are set forth in Table 2.

**Table 2**

| **Sample No** | **Starch Type** |
|---|---|
| 1 | Drum dried waxy corn 1 |
| 2 | Drum dried waxy corn 2 |
| 3 | Drum dried waxy corn 3 |
| 4 | Drum dried waxy corn 4 |
| 5 | Spray cooked agglomerated waxy corn |
| 6 | Spray dried waxy corn starch |
| 7 | Drum dried waxy corn starch 5 |
| 8 | Pregelled, converted tapioca starch |

### Example 1

### Peanut Coatings

Eight batches of coated peanuts were prepared in a coating process involving a coating mixture prepared from each of the Sample No 1-8 starches set forth in Table 2, adhesion layer, and peanuts in the components and weight percentages set forth in Tables 3 and 4. A coating mixture was prepared by mixing a Sample No 1-8 starch with wheat flour until homogenous. The adhesion layer was prepared by mixing sucrose and water together and heating until the sucrose completely dissolved. The adhesion layer was cooled before being used further.

**Table 3**

| **Component** | **Weight Percent of Total** |
|---|---|
| *Adhesion Layer* | 33% |
| *Peanuts* | 32% |
| *Coating Mixture* | 35% |

**Table 4**

| **Component** | **Weight Percent of Total** |
|---|---|
| *Adhesion Layer* | |
| Sucrose | 65% |
| Water | 35% |

| *Coating Mixture* | |
|---|---|
| One Table 2 Starch | 50% |
| Wheat Flour | 50% |

The peanuts were coated by first dividing the peanuts, coating mixture, and adhesion layer into 7 parts. One part peanuts was added to a pan coater with one part adhesion layer and coating mixture and the contents mixed for 7 minutes to provide coated peanuts. This was repeated for each of the other 6 parts. The coated peanuts were baked in an oven for 25 minutes at 130°C. The baked peanuts were removed from the oven and cooled for 30 minutes before packing.

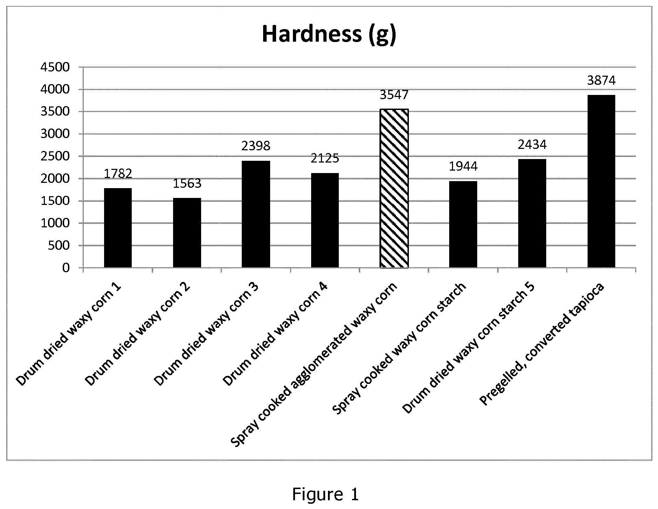

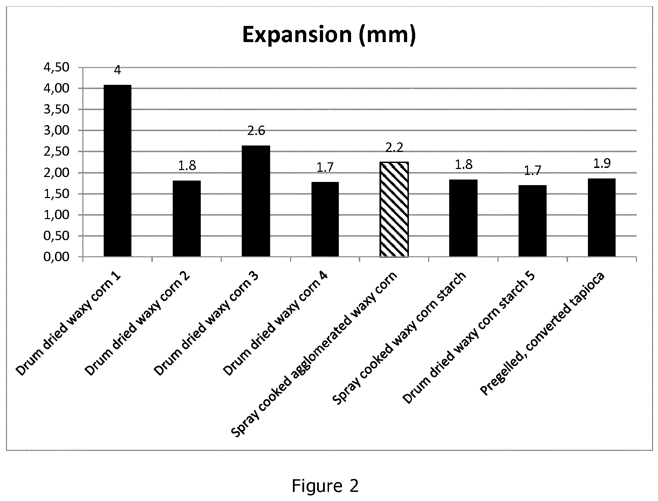

Figures 1 and 2 show that spray cooked agglomerated waxy corn starch (Sample No. 5 from Table 2) expanded to about 2.25 mm and had a hardness of about 3500 g.

## Claims

1. A method of making a coated foodstuff comprising:
coating an edible substrate with a coating comprising at least one layer of a coating mixture comprising a spray cooked, agglomerated waxy corn starch as a first starch; and
baking the coated edible substrate at a temperature from 130° C and 190° C for a time between 10 and 60 minutes.

2. The method of claim 1 wherein:
the edible substrate has a moisture content of less than about 5%.

3. The method according to any preceding claim, wherein said coating mixture further comprises a second starch.

4. The method according to any preceding claim, wherein the first starch has a peak hydration viscosity of between 5.5 and 7.5 minutes and wherein the peak hydration viscosity is measured as indicated in the specification.

5. The method according to claims 3 or 4, wherein the first and second starch are mixed in a weight ratio of between about 3:1 and about 1:3.

6. A method of making a coated foodstuff according to claim 1 wherein the edible substrate has a moisture content of less than about 5%;
the coating comprises at least one layer of a mixture comprising a first starch **characterized by** being a spray cooked agglomerated waxy corn starch having a time to peak hydration viscosity of between 5.5 and 7.5 minutes and wherein the peak hydration viscosity is measured as indicated in the specification; and
a second starch that is a starch or flour; and
wherein the first and second starch are mixed in a weight ratio of between about 3:1 and about 1:3.

7. The method of any preceding claim, wherein said coating has a coating expansion of between about 1.7 and about 2.6 mm, between about 2.0 and about 2.5 mm, between about 2.125 and about 2.375 mm, or between about 2.2 and 2.3 mm.

8. The method of any preceding claim, wherein said coating has a hardness of between about 2500 and about 4000 grams, about 2500 and about 3800 grams, about 2600 and about 3800 grams, abut 2700 and about 3750 grams, about 2800 and about 3750 grams, about 2900 and about 3750 grams, about 3250 and about 3500, or about 3000 and about 3750 grams, after baking for 25 minutes at 130° C, and wherein the hardness is measured as indicated in the specification.

9. The method of any preceding claim, wherein said coating has a hardness-to-expansion ratio of about 1100:1 to about 2200:1 g/mm, about 1500:1 to about 1600:1 g/mm, or about 1550:1 to about 1575:1 g/mm, wherein the hardness is the hardness when the coated foodstuff after baking for 25 minutes at 130° C and wherein the hardness and expansion are measured as indicated in the specification.

10. The method of any preceding claim, wherein the edible substrate is a nut, seed, legume, or vegetable.

11. The method of any one of claims 3-10, wherein the second starch is a gluten free starch or wheat flour and said wheat flour is optionally unmodified.

12. The method of any one of claims 3-11, wherein said coating involves the application of 2 or more layers, 5 or more layers, 10 or more layers or up to 10 layers and said coating mixture comprises equal parts of said first starch and second starch, wherein said second starch is optionally unmodified wheat flour, wherein each layer is optionally adhered to the edible substrate with an adhesion layer comprising sucrose and water, wherein each layer is optionally adhered in a pan-coater for seven minutes, wherein said coating has a hardness-to-expansion ratio of about 1500:1 to about 1600:1 g/mm after baking coated foodstuff for 25 minutes at 130° C and wherein the hardness and expansion are measured as indicated in the specification.

13. The method of any preceding claim, wherein the first starch has a d₅₀ of between about 150 and about 250 microns or between about 175 and about 225 microns; or d₁₀ of between about 50 and about 100 microns; and optionally a d₉₀ of between about 325 and about 425 microns or between about 350 and about 400 microns and wherein the particle size of the first starch are measured by laser diffraction.

## Patentansprüche

1. Verfahren zum Herstellen eines überzogenen Lebensmittels, umfassend:
Überziehen eines essbaren Substrats mit einem Überzugsmaterial, das mindestens eine Schicht einer Überzugssmischung umfasst, die eine sprühgekochte, agglomerierte Wachsmaisstärke als eine erste Stärke umfasst; und
Backen des überzogenen essbaren Substrats bei einer Temperatur von zwischen 130 °C und 190 °C für eine Zeitdauer zwischen 10 und 60 Minuten.

2. Verfahren nach Anspruch 1, wobei:
das essbare Substrat einen Feuchtigkeitsgehalt von weniger als etwa 5 % aufweist.

3. Verfahren nach einem der vorstehenden Ansprüche, wobei die Überzugsmischung ferner eine zweite Stärke umfasst.

4. Verfahren nach einem der vorstehenden Ansprüche, wobei die erste Stärke eine maximale Hydratationsviskosität zwischen 5,5 und 7,5 Minuten aufweist und wobei die maximale Hydratationsviskosität wie in der Beschreibung angegeben gemessen wird.

5. Verfahren nach Anspruch 3 oder 4, wobei die erste und die zweite Stärke in einem Gewichtsverhältnis von zwischen etwa 3:1 und etwa 1:3 gemischt sind.

6. Verfahren zum Herstellen eines überzogenen Nahrungsmittels nach Anspruch 1, wobei das essbare Substrat einen Feuchtigkeitsgehalt von weniger als etwa 5 % aufweist;
der Überzug mindestens eine Schicht einer Mischung umfasst, die eine erste Stärke umfasst, die **dadurch gekennzeichnet ist, dass** es sich um eine sprühgekochte agglomerierte Wachsmaisstärke mit einer Zeit bis zur maximalen Hydratationsviskosität zwischen 5,5 und 7,5 Minuten handelt, wobei die maximale Hydratationsviskosität wie in der Beschreibung angegeben gemessen wird; und
eine zweite Stärke, die eine Stärke oder Mehl ist; und
wobei die erste und die zweite Stärke in einem Gewichtsverhältnis von zwischen etwa 3:1 und etwa 1:3 gemischt sind.

7. Verfahren nach einem der vorstehenden Ansprüche, wobei der Überzug eine Überzugsausdehnung von zwischen etwa 1,7 und etwa 2,6 mm, zwischen etwa 2,0 und etwa 2,5 mm, zwischen etwa 2,125 und etwa 2,375 mm oder zwischen etwa 2,2 und 2,3 mm aufweist.

8. Verfahren nach einem der vorstehenden Ansprüche, wobei der Überzug nach dem Backen für 25 Minuten bei 130 °C eine Härte von zwischen etwa 2500 und etwa 4000 Gramm, etwa 2500 und etwa 3800 Gramm, etwa 2600 und etwa 3800 Gramm, etwa 2700 und etwa 3750 Gramm, etwa 2800 und etwa 3750 Gramm, etwa 2900 und etwa 3750 Gramm, etwa 3250 und etwa 3500 oder etwa 3000 und etwa 3750 Gramm aufweist, und wobei die Härte wie in der Beschreibung angegeben gemessen wird.

9. Verfahren nach einem der vorstehenden Ansprüche, wobei der Überzug ein Härte-Ausdehnungs-Verhältnis von etwa 1100:1 bis etwa 2200:1 g/mm, etwa 1500:1 bis etwa 1600:1 g/mm oder etwa 1550:1 bis etwa 1575:1 g/mm aufweist, wobei die Härte die Härte des überzogenen Lebensmittels nach dem Backen für 25 Minuten bei 130 °C ist und wobei die Härte und die Ausdehnung wie in der Beschreibung angegeben gemessen werden.

10. Verfahren nach einem der vorstehenden Ansprüche, wobei das essbare Substrat eine Nuss, ein Samen, eine Hülsenfrucht oder ein Gemüse ist.

11. Verfahren nach einem der Ansprüche 3 bis 10, wobei die zweite Stärke eine glutenfreie Stärke oder Weizenmehl ist und das Weizenmehl optional unmodifiziert ist.

12. Verfahren nach einem der Ansprüche 3 bis 11, wobei der Überzug das Aufbringen von 2 oder mehr Schichten, 5 oder mehr Schichten, 10 oder mehr Schichten oder bis zu 10 Schichten beinhaltet und die Überzugsmischung gleiche Teile der ersten Stärke und der zweiten Stärke umfasst, wobei die zweite Stärke optional unmodifiziertes Weizenmehl ist, wobei jede Schicht optional mit einer Haftschicht, die Saccharose und Wasser umfasst, mit dem essbaren Substrat verklebt wird, wobei jede Schicht optional sieben Minuten lang in einem Dragierkessel verklebt wird, wobei der Überzug ein Härte-Ausdehnungsverhältnis von etwa 1500:1 bis etwa 1600:1 g/mm aufweist, nachdem das beschichtete Lebensmittel 25 Minuten lang bei 130 °C gebacken wurde, und wobei die Härte und Ausdehnung wie in der Beschreibung angegeben gemessen werden.

13. Verfahren nach einem der vorstehenden Ansprüche, wobei die erste Stärke einen d₅₀-Wert zwischen etwa 150 und etwa 250 Mikrometern oder zwischen etwa 175 und etwa 225 Mikrometern aufweist; oder einen d₁₀-Wert zwischen etwa 50 und etwa 100 Mikrometern; und optional einen d₉₀-Wert zwischen etwa 325 und etwa 425 Mikrometern oder zwischen etwa 350 und etwa 400 Mikrometern aufweist, und wobei die Partikelgröße der ersten Stärke durch Laserbeugung gemessen wird.

## Revendications

1. Procédé de fabrication d'un produit alimentaire enrobé comprenant :
l'enrobage d'un substrat comestible avec un enrobage comprenant au moins une couche d'un mélange d'enrobage comprenant un amidon de maïs cireux aggloméré cuit par pulvérisation comme premier amidon ; et
la cuisson du substrat comestible enrobé à une température comprise entre 130 °C et 190 °C pendant une durée comprise entre 10 et 60 minutes.

2. Procédé selon la revendication 1 dans lequel :
le substrat comestible a une teneur en humidité inférieure à environ 5 %.

3. Procédé selon une quelconque revendication précédente, dans lequel ledit mélange d'enrobage comprend en outre un second amidon.

4. Procédé selon une quelconque revendication précédente, dans lequel le premier amidon a une viscosité d'hydratation maximale comprise entre 5,5 et 7,5 minutes et dans lequel la viscosité d'hydratation maximale est mesurée comme indiqué dans la spécification.

5. Procédé selon les revendications 3 ou 4, dans lequel le premier et le second amidon sont mélangés dans un rapport de poids compris entre environ 3:1 et environ 1:3.

6. Procédé de fabrication d'un produit alimentaire enrobé selon la revendication 1, dans lequel le substrat comestible a une teneur en humidité inférieure à environ 5 % ;
l'enrobage comprend au moins une couche d'un mélange comprenant un premier amidon **caractérisé en ce qu'il** s'agit d'un amidon de maïs cireux aggloméré cuit par pulvérisation dont le temps de viscosité d'hydratation maximale se situe entre 5,5 et 7,5 minutes et dans lequel la viscosité d'hydratation maximale est mesurée comme indiqué dans la spécification ; et
un second amidon qui est un amidon ou une farine ; et
dans lequel le premier et le second amidon sont mélangés dans un rapport de poids compris entre environ 3:1 et environ 1:3.

7. Procédé selon une quelconque revendication précédente, dans lequel ledit enrobage a une expansion d'enrobage comprise entre environ 1,7 et environ 2,6 mm, entre environ 2,0 et environ 2,5 mm, entre environ 2,125 et environ 2,375 mm, ou entre environ 2,2 et 2,3 mm.

8. Procédé selon une quelconque revendication précédente, dans lequel ledit enrobage a une dureté comprise entre environ 2500 et environ 4000 grammes, environ 2500 et environ 3800 grammes, environ 2600 et environ 3800 grammes, environ 2700 et environ 3750 grammes, environ 2800 et environ 3750 grammes, environ 2900 et environ 3750 grammes, environ 3250 et environ 3500, ou environ 3000 et environ 3750 grammes, après une cuisson pendant 25 minutes à 130 °C, et dans lequel la dureté est mesurée comme indiqué dans la spécification.

9. Procédé selon une quelconque revendication précédente, dans lequel ledit enrobage a un rapport dureté-expansion d'environ 1100:1 à environ 2200:1 g/mm, d'environ 1500:1 à environ 1600:1 g/mm, ou d'environ 1550:1 à environ 1575:1 g/mm, dans lequel la dureté est la dureté du produit alimentaire enrobé après une cuisson pendant 25 minutes à 130 °C et dans lequel la dureté et l'expansion sont mesurées comme indiqué dans la spécification.

10. Procédé selon une quelconque revendication précédente, dans lequel le substrat comestible est une noix, une graine, une légumineuse ou un légume.

11. Procédé selon l'une quelconque des revendications 3 à 10, dans lequel le second amidon est un amidon sans gluten ou de la farine de blé et ladite farine de blé est éventuellement non modifiée.

12. Procédé selon l'une quelconque des revendications 3 à 11, dans lequel ledit enrobage implique l'application de 2 couches ou plus, 5 couches ou plus, 10 couches ou plus ou jusqu'à 10 couches et ledit mélange d'enrobage comprend des parties égales dudit premier amidon et dudit second amidon, dans lequel ledit second amidon est éventuellement de la farine de blé non modifiée, dans lequel chaque couche est éventuellement collée au substrat comestible avec une couche d'adhérence comprenant du saccharose et de l'eau, dans lequel chaque couche est éventuellement collée dans un bain-marie pendant sept minutes, dans lequel ledit enrobage a un rapport dureté-expansion d'environ 1500:1 à environ 1600:1 g/mm après cuisson du produit alimentaire enrobé pendant 25 minutes à 130 °C et dans lequel la dureté et l'expansion sont mesurées comme indiqué dans la spécification.

13. Procédé selon une quelconque revendication précédente, dans lequel le premier amidon a un d₅₀ compris entre environ 150 et environ 250 microns ou entre environ 175 et environ 225 microns ; ou un d₁₀ compris entre environ 50 et environ 100 microns ; et éventuellement un d₉₀ compris entre environ 325 et environ 425 microns ou entre environ 350 et environ 400 microns et dans lequel la taille de particule du premier amidon est mesurée par diffraction laser.
